Europäisches Patentamt

**European Patent Office**

Office européen des brevets

(11) Numéro de publication: **0 106 721**
**A2**

(12) **DEMANDE DE BREVET EUROPEEN**

(21) Numéro de dépôt: **83401710.5**

(22) Date de dépôt: **26.08.83**

(51) Int. Cl.³: **G 01 N 21/64**
**H 04 N 5/30**

(30) Priorité: **03.09.82 FR 8215054**

(43) Date de publication de la demande:
**25.04.84 Bulletin 84/17**

(84) Etats contractants désignés:
**AT BE CH DE GB IT LI LU NL SE**

(71) Demandeur: **De France, Henri Georges**
**6, Avenue de Dr. Brouardel**
**F-75016 Paris(FR)**

(71) Demandeur: **Floirat, Sylvain**
**65, Boulevard Lannes**
**F-75016 Paris(FR)**

(72) Inventeur: **de France, Henri Georges**
**6, avenue du Docteur Brouardel**
**F-75016 Paris(FR)**

(74) Mandataire: **Battut, Michel**
**Compagnie Française de Télévision 66, rue Pierre**
**Charron**
**F-75008 Paris(FR)**

(54) **Système pour l'observation et la quantification automatiques de phénomènes susceptibles d'être détectés par fluorescence.**

(57) Système pour l'observation et la quantification automatiques des phénomènes susceptibles d'être détectés par fluorescence et apparaissant dans une zone localisée (8), ledit système comportant une source de rayonnement (2), éventuellement associée à un filtre d'excitation (5) pour envoyer sur ladite zone localisée (8) un rayonnement d'excitation apte à produire ladite fluorescence, des moyens d'observation optique (7) de ladite zone localisée (8) et au moins un filtre (12) destiné à arrêter le rayonnement d'excitation et disposé sur le trajet du rayonnement lumineux de fluorescence provenant de ladite zone localisée (8).

Selon l'invention, on observe la zone localisée (8) au moyen d'un tube de prise de vue (17) et à travers des filtres colorés ou fenêtres portés par un disque (18) coupant le faisceau (11). Les images colorées successives sont mémorisées puis lues simultanément.

Fig. 1

EP 0 106 721 A2

Système pour l'observation et la quantification automatiques de phénomènes susceptibles d'être détectés par fluorescence.

La présente invention concerne un système permettant l'observation et la quantification automatiques de phénomènes susceptibles d'être détectés par une émission de fluorescence, cette fluorescence pouvant être soit spontanée, soit provoquée. Quoique non exclusivement, elle s'applique tout particulièrement à l'immunofluorescence - c'est-à-dire à l'étude des réactions immunologiques d'organismes vivants par marquage de produits d'une réaction avec un ou plusieurs corps fluorescents rendant cette réaction visible - et, à des fins d'explication, elle sera plus spécialement décrite ci-après dans le cadre de cette application particulière, ce qui ne doit pas être considéré comme limitatif de la portée de la présente invention.

On sait que la fluorescence est la propriété de certains corps d'émettre des photons en réponse à la réception d'un rayonnement visible ou invisible. Exception faite du phénomène dit de fluorescence de résonance, à cause de la perte d'énergie entre l'absorption et l'émission du rayonnement, les photons de fluorescence sont moins énergétiques que les photons du rayonnement incident et leur longueur d'onde est donc plus grande.

Lors du bombardement de molécules susceptibles de fluorescence par une source de rayonnement de longueur d'onde adéquate, des électrons de ces molécules quittent leurs orbites stables normales pour passer sur des orbites extérieures qui correspondent à des niveaux d'énergie supérieurs, en formant des singulets excités. Lorsque la désexcitation se produit, les électrons retombent sur leurs orbites stables en émettant des photons de fluorescence.

La durée de vie de cette fluorescence est très courte, de l'ordre de la nanoseconde, quoique variable en fonction de la nature et de l'état physique des molécules excitées. Même en irradiation continue, le phénomène de fluorescence décroît exponentiellement en fonction du temps. De plus, le rendement quantique de la fluorescence est faible, par exemple égal à 3% pour la fluorescence de la chlorophylle, de sorte que l'intensité de la fluorescence, qui varie toutefois en fonction de l'intensité de la source d'excitation, de la concentration, du pH, de la présence d'impuretés et de la nature des molécules excitées,est également faible. On conçoit donc aisément que, à cause de sa fugacité et sa faible intensité continûment décroissante, le phénomène de fluorescence soit particulièrement difficile à observer et à quantifier.

De nombreux composés organiques, même de synthèse, sont spontanément fluorescents. Il en est de même de nombreuses plantes, animaux, insectes, etc... Par ailleurs, on sait fabriquer des colorants fluorescents, tels que l'isothiocyanate de fluorescéine (ITCF) qui émet dans le vert, l'isothiocyanate de tétraméthyl rhodamine qui émet dans le rouge, le chlorure d'aminonaphtalène sulfonyl qui émet dans le jaune, le "bleu d'Evans" destiné à masquer certaines fluorescences spontanées lorsqu'elles gênent et qui émet dans le rouge, etc...

Le colorant fluorescent actuellement le plus utilisé est l'ITCF qui doit être excité par une source dont le maximum de longueur d'onde doit se trouver vers 495 nm dans le bleu et qui réémet dans le vert avec un maximum à 520 nm, l'émission se prolongeant toutefois au-delà de 600nm, c'est-à-dire dans le rouge.

Par ailleurs, on sait que les réactions immunologiques qui se produisent dans un organisme vivant résultent de la rencontre d'une substance en principe étrangère audit organisme, appelée antigène, et d'un anticorps ou immunoglobuline, engendré par l'organisme pour combattre l'antigène.

Les réactions entre anticorps et antigènes peuvent se matérialiser par une précipitation ou par une agglutination et une telle agglutination est déjà utilisée pour quantifier les réactions anticorps-antigènes. Cependant, tous les anticorps ne sont pas agglutinants et, pour des raisons pratiques, il a paru interessant de mettre en oeuvre d'autres techniques de quantification des réactions anticorps-antigène.

C'est ainsi que COONS a déjà proposé une technique appelée immunofluorescence, selon laquelle on lie les anticorps (parfois les antigènes), directement ou indirectement, à un corps fluorescent, le plus souvent l'ITCF mentionné ci-dessus, de sorte que la réaction anticorps-antigène est rendue fluorescente, donc visible, lorsque les anticorps se fixent sur les antigènes. Une telle technique est sensible et rapide, ne nécessitant pas la mise en culture des germes. Dans le processus direct, on applique sur l'antigène un immunosérum additioné de colorant fluorescent. Dans le processus indirect, le corps fluorescent est fixé sur un "anticorps" ou antiglobuline, préparé à l'avance et susceptible d'être fixé lui-même sur l'anticorps que l'on désire étudier.

Sur les coupes de tissus, la réaction d'immunofluorescence permet de mettre en évidence les cellules du type que l'on veut étudier par rapport à d'autres qui ne seront pas rendues fluorescentes. Le marquage par immunofluorescence est moins compliqué que le marquage radioimmunologique.

Pour mettre en oeuvre une telle technique d'immunofluorescence pour une réaction ou un phénomène apparaissant dans une zone localisée (généralement une lame de verre, un alvéole d'une plaque à alvéoles, etc...), on a déjà mis en oeuvre un système comportant une source de rayonnement, éventuellement associée à au moins un filtre d'excitation, pour envoyer sur ladite zone localisée un rayonnement d'excitation apte à produire ladite fluorescence, des moyens optiques associés à l'oeil, pour observer ladite zone localisée et au moins un filtre d'arrêt pour ne laisser parvenir à l'oeil que l'émission de fluorescence provenant de ladite zone localisée. Dans le cas d'immunofluorescence à l'aide d'ITCF, la source de rayonnement est par exemple une lampe à arc à vapeur de mercure du type HBO 100, ayant une luminance considérable, de l'ordre de $1,5.10^9$ cd/m$^2$ et émettant dans le bleu.

Les filtres d'excitation, disposés en aval de la source de rayonnement, choisissent le rayonnement utile pour produire la fluorescence, tandis que les filtres d'arrêt disposés au mieux entre la zone localisée et l'oeil, éliminent les rayonnements n'interessant pas le phénomène de fluorescence. Du fait que les maxima des longueurs d'onde du rayonnement d'excitation et de l'émission de la fluorescence sont proches l'un de l'autre, le choix des filtres d'excitation et des filtres d'arrêt se révèle extrêmement délicat dans la pratique.

Les moyens optiques d'observation sont toujours constitués par un microscope spécialement adapté à la technique de l'immunofluorescence et, de ce fait, sophistiqué, performant, délicat, coûteux et astreignant pour l'opérateur. Ce microscope comporte, en aval de la source de rayonnement et des filtres d'excitation, un miroir dichroïque permettant d'envoyer le rayonnement d'excitation vers la zone localisée et de laisser passer l'émission de fluorescence vers l'oeil de l'observateur. De plus, le microscope comporte une platine portant une pluralité de zones localisées, des commandes permettant de déplacer ladite platine sous un ou plusieurs objectifs de grandissements divers et un oculaire. Le ou les objectifs donnent de l'objet observé une image réelle, tandis que l'oculaire fournit à l'oeil une image virtuelle grossie.

En actionnant lesdites commandes de la platine, l'oeil voit défiler à l'oculaire une partie de l'objet (difficile à situer) après que la mise au point, individuelle qui lui convient, ait été effectuée. Ainsi, plusieurs personnes ne peuvent voir commodément ensemble et la mise au point doit être refaite pour chacun. Par ailleurs, l'endroit de l'objet observé n'est généralement pas localisable sur ledit objet.

En règle générale, l'objectif des microscopes de fluorescence grandit de 10 à 40 fois, tandis que l'oculaire grossit de 10 à 40 fois. Si la luminance de l'objet observé est de l'ordre de $10^6$ cd/m$^2$, l'éclairement n'est que de quelques lux à la sortie de l'oculaire.

Lorsque, comme cela est le cas en immunofluorescence, on désire mettre en oeuvre une telle technique pour examiner des réactions, il est indispensable de réaliser une préparation spéciale, qui est l'aboutissement d'un travail minutieux. Dans le cas de l'immunofluorescence, on commence par effectuer sur un patient un prélèvement de sang ou une biopsie. Lorsqu'il s'agit par exemple de rechercher des anticorps dans le sérum de ce patient, on utilise un sérum antiglobuline marqué, par exemple à l'ITCF, et des antigènes de test, préparés à l'avance. Le sérum antiglobuline est titré, c'est-à-dire que sa dilution est connue, et on utilise soit la dilution maxima devant donner la fluorescence maxima, soit la dilution juste inférieure si ce sérum a un titre élevé. En ce qui concerne le sérum du malade, on prépare également des dilutions successives, qui permettent une forme approximative de quantification de l'intensité de la réaction anticorps-antigène et de son évolution dans le temps : en effet, si l'on trouve encore des anticorps pour des dilutions élevées, on peut en déduire qu'il y avait beaucoup d'anticorps dans le sérum du patient ; si, quelques semaines après une observation, la réaction est positive pour une dilution plus grande, on peut en déduire que la maladie est en évolution, etc...

On remarquera que seule l'expérience peut indiquer, par avance, les dilutions intéressantes à utiliser pour telle ou telle maladie. Les dilutions utilisées pour une même maladie peuvent donc varier d'un laboratoire à l'autre et même d'une laborantine à l'autre. Il est donc seulement possible de savoir si un patient est malade ou non et si sa maladie évolue vers l'aggravation ou vers la guérison. Il est donc interessant de pouvoir perfectionner le système connu de mise en oeuvre de la technique d'immunofluorescence pour obtenir une véritable quantification des anticorps.

Par ailleurs, comme mentionné ci-dessus, la préparation est placée sur une lame ou les alvéoles d'une plaque, qui seront disposées sur la platine du microscope et déplacées sous l'objectif de façon à permettre l'examen successif de la pluralité d'alvéoles. Outre le fait qu'il s'agit là d'un fastidieux travail de patience, spécialement lorsqu'il faut étudier des dilutions successives, déterminer le passage d'une réaction à la négativité, regarder des images à faible luminosité et à couleur peu distincte, on remarquera que les résultats ne peuvent être que subjectifs et même aléatoires, car dépendant de l'appréciation de l'oeil.

En effet, c'est le sens visuel de la laborantine qui lui fait décider sur des critères de couleur et d'intensité lumineuse, de la positivité ou de la négativité d'une réaction. Du fait que l'on opère avec des sérums de titre très variable et avec des dilutions parfois très poussées, l'image à étudier, quand une réaction est faiblement positive ou négative, peut être très peu lumineuse, ce qui pose divers problèmes.

Les couleurs à bien distinguer en immunofluorescence sont le plus souvent le vert de l'ITCF, le rouge du Bleu d'Evans et le rouge de la rhodamine, à des éclairements variant de 1 à $10^{-4}$ lux environ.

Le premier facteur visuel intervenant dans l'immunofluorescence est le phénomène dit de PURKINJE, qui constate que la courbe de la sensibilité de l'oeil en vision diurne (plus de 10 cd/m$^2$) montre un maximum dans le vert et que ce maximum se décale vers le bleu au fur et à mesure que la luminance d'ambiance baisse.

En outre, l'oeil est globalement moins sensible à toutes les longueurs d'onde, au fur et à mesure que l'obscurité progresse. Ainsi, deux radiations, par exemple l'une verte et l'autre rouge qui seraient perçues subjectivement comme d'intensité équivalente le jour, donneraient l'impression dans l'obscurité que le vert est beaucoup plus intense que le rouge. L'oeil ne peut comparer valablement deux couleurs, que si la luminance ne change pas. Si la luminance augmente le vert semble devenir plus jaune et le rouge plus orangé. Par suite, dans l'observation de l'immunofluorescence, on ne risque pas de ne pas voir la fluorescence verte : cependant, on subit une perte de définition aux bas éclairements et une mauvaise visibilité du rouge. En cas de mélange de fluorescence verte et de fluorescence rouge, l'oeil peut ne voir que le vert, ou voir le vert plus jaune qu'il n'est, s'il y a plus de vert que de rouge. S'il y a autant de vert que de rouge, il peut voir du jaune là où il n'y en a pas.

Par ailleurs, l'oeil est sujet à des erreurs de vision par suite d'inhibitions que ses cellules exercent les unes sur les autres. Par exemple, le contraste entre deux plages contiguës, l'une claire, l'autre foncée, est exagéré, la frontière étant bordée d'un noir plus foncé et d'un blanc plus clair. L'oeil renforce ainsi les contours. De même, si l'on regarde fixement un objet, par exemple rouge bordé de vert, puis un fond blanc ou gris, on verra apparaître sur ce fond une image illusoire verte bordée de rouge. De plus, la sensation du noir varie avec la luminance.

En ce qui concerne l'acuité visuelle, on sait qu'elle ne décroît pas de façon égale pour toutes les longueurs d'onde : ainsi, en-dessous de 1 à 2 lux, elle est moins bonne pour le rouge que pour le vert, mais à $10^{-4}$ lux, elle est mauvaise aussi bien pour le rouge que pour le vert. L'oeil ne pourrait alors séparer mieux que 2 à 3 $\mu$m avec un microscope grossissant 400 fois et qui permet théoriquement de séparer deux points distants de 0,25 $\mu$m pour un oeil ayant une acuité visuelle de dix dixièmes.

En outre, l'oeil est tributaire du temps, quand la luminance est basse. Les cônes de l'oeil mettent 7 à 10 minutes pour atteindre leur meilleur rendement quand la luminance est comprise entre 1 et 0,1 cd/m$^2$. Pour une luminance inférieure, les cônes cessent de s'adapter et les bâtonnets de l'oeil prennent le relais, avec une bien meilleure sensibilité, mais avec une très mauvaise acuité. Par suite, non seulement on doit prendre du temps au cours des examens pour laisser à l'oeil le temps de s'adapter, mais encore la vision est alors particulièrement défectueuse.

Enfin, l'oeil est sujet à la fatigue qui modifie ses possibilités.

Ainsi, la mise en oeuvre actuelle de la technique d'immunofluorescence présente de nombreuse imperfections qui ne lui permettent pas une vraie quantification. Or, l'intérêt de cette technique est considérable, car elle permet le diagnostic, le dépistage et l'étude de maladies de l'homme et des animaux ainsi que le progrès de la recherche en biologie et en pathologie.

Entre autres exemples, l'immunofluorescence permet la mise en évidence rapide de nombreux germes et parasites, tels que ceux du charbon, de certaines méningites, de la coqueluche et de la brucellose, de plusieurs mycoses, de la diphtérie, de certaines pneumonies, de la colibacillose, des salmonelloses et shigelloses, de la toxoplasmose, de l'histoplasmose, de la mononucléose , de la pasteurellose, de la leptospirose, de la listériose, de la trichinose, de la tuberculose, de la syphilis, d'infections à streptocoques, staphylocoques, pyocyaniques, gonocoques, du paludisme, de la distomatose, de la bilharziose, etc... Elle permet de plus de détecter des anticorps antinucléaires, antipeaux, des virus tel que l'herpes-virus, etc..., ainsi que la mise en oeuvre des tests HLA.

Aussi, l'objet principal de la présente invention est de réaliser un système remédiant aux inconvénients du système connu décrit ci-dessus et permettant de mettre à profit toutes les possibilités de la méthode d'immunofluorescence en accroissant la qualité des résultats obtenus et en simplifiant la mise en oeuvre. Cet objet principal est obtenu notamment en s'affranchissant de l'usage de l'oeil humain et en automatisant le système, de façon à permettre una quantification véritable des réactions d'immunofluorescence.

A cette fin, selon l'invention, le système pour l'observation et la quantification automatiques de phénomènes susceptibles d'être détectés par fluorescence et apparaissant dans une zone localisée, ledit système comportant une source de rayonnement, éventuellement associée à un filtre d'excitation pour envoyer sur ladite zone localisée un rayonnement d'excitation apte à produire ladite fluorescence, des moyens d'observation optique de ladite zone localisée et au moins un filtre destiné à arrêter le rayonnement d'excitation et disposé sur le trajet du rayonnement lumineux de fluorescence provenant de ladite zone localisée est remarquable en ce qu'il comporte un tube de prise de vue à gain variable examinant successivement ladite zone localisée à travers lesdits moyens d'observation optiques et à travers au moins deux filtres colorés différents choisis en fonction de la longueur d'onde du rayonnement lumineux de fluorescence, des moyens de mémorisation pour enregistrer les signaux électriques correspondant aux images colorées individuelles vues par ledit tube de prise de vue, des moyens pour restituer simultanément lesdits signaux électriques à la sortie desdites mémoires et des moyens pour faire varier le gain dudit tube de prise de vue de façon que l'amplitude des signaux de sortie de celui-ci soit toujours supérieure à un seuil endessous duquel la rémanence du tube devient gênante.

Ainsi, grâce à l'invention, on s'affranchit des deux difficultés importantes de l'observation et de la quantification des phénomènes fluorescents, à savoir le faible rendement et la fugacité, tout en mettant à profit le fait que les phénomènes fluorescents observés sont immobiles et qu'il est donc possible de transmettre séparément et successivement puis de superposer des images fixes différemment colorées d'un même phénomène afin d'analyser et de reconstituer ce phénomène fluorescent. Dans le cas d'immunofluorescence il est généralement suffisant de n'utiliser que deux images colorées différentes, à savoir une image rouge et une image verte cependant, dans certains cas, il peut être avantageux d'utiliser une troisième image, bleue par exemple.

On notera que le système selon l'invention peut se dispenser d'utiliser l'oeil humain qui, comme mentionné ci-dessus, est incapable d'effectuer une réelle quantification. De plus, ce système ne nécessite qu'un seul tube de prise de vue, de sorte que l'on peut obtenir une parfaite superposition des images colorées individuelles point à point et que l'on évite les inconvénients des dispositifs de télévision en couleur à plusieurs tubes, dus à la dispersion des caractéristiques de ceux-ci.

De préférence, dans le système selon l'invention, le tube de prise de vue est amené de plus à examiner directement ladite zone localisée pour en donner une représentation en noir et blanc utilisée pour la mise au point, manuelle ou automatique, dudit tube de prise de vue. Ainsi, une telle image en noir et blanc, qui peut présenter une haute définition, permet de faire la mise au point des moyens d'observation optiques, de façon que le faisceau lumineux de fluorescence soit exactement focalisé sur la photocathode dudit tube de prise de vue pendant l'observation des images colorées individuelles.

Par ailleurs, afin de minimiser en plus les effets de la rémanence du tube, il est avantageux que le tube de prise de vue soit occulté ou bloqué entre deux examens successifs à travers des filtres colorés successifs et/ou entre un examen à travers un filtre coloré et l'examen direct destiné à donner la représentation en noir et blanc.

A cet effet, il est pratique de prévoir un disque pourvu au moins d'une fenêtre correspondant à l'examen direct en noir et blanc, de filtres colorés et de plages opaques et mû en rotation de façon à amener successivement lesdits fenêtre, filtres et plages à couper le faisceau lumineux de fluorescence adressé audit tube de prise de vue.

Un tel disque est entraîné par un moteur dont le fonctionnement est bien entendu synchronisé avec le reste du système selon l'invention et notamment la mise en mémoire des signaux correspondant aux images colorées individuelles. Pour assurer au moins en partie une telle synchronisation, il est avantageux de prévoir des capteurs fixes, par exemple optoélectroniques, coopérant avec des repères dudit disque, par exemple des fenêtres.

Malgré la présence du ou des filtres d'arrêt sur le faisceau lumineux de fluorescence, une partie du rayonnement d'excitation parvient audit tube de prise. Aussi, pour éviter cet inconvénient et pour tenir compte du fait que cette partie du rayonnement d'excitation intervient différemment pour les diverses images colorées, on prévoit des réglages séparés du niveau du fond pour chaque image colorée et on asservit ces réglages au gain d'amplification dudit tube de prise de vue, de façon que ces réglages soient corrects pour toutes les valeurs du gain de ce tube.

Par ailleurs, il est bien connu que l'image d'une zone lumineuse présente généralement un éclairement plus intense en son centre que sur ses bords, l'importance du phénomène étant d'autant plus grande que l'intensité lumineuse est plus grande et vice-versa. Il en résulte que le fond des images observées présente une forme de dôme,qui ne correspond pas à une variation d'éclairement réelle de la zone lumineuse elle-même. Aussi, pour éviter cet inconvénient, on prévoit, selon l'invention, un générateur, asservi au gain du tube de prise de vue et engendrant des signaux en cuvette, destinés à annuler le fond en dôme des signaux provenant dudit tube de prise de vue.

Bien entendu, cet effet naturel de dôme est spatial et non pas linéaire, de sorte qu'il est avantageux de prévoir une correction par signaux en cuvette, aussi bien dans le sens des lignes d'image que dans le sens de trame.

De plus, il est préférable de prévoir, en aval desdits moyens de mémorisation, des moyens de suppression de fond. De tels moyens peuvent mettre en oeuvre une intégration et un redressement des signaux d'image et la soustraction des signaux ainsi obtenus des signaux réels.

Pour augmenter encore la pureté des signaux colorés obtenus, il est avantageux de prévoir des moyens pour effectuer, d'une part, la différence entre les signaux provenant du premier filtre coloré et ceux provenant du second filtre coloré et, d'autre part, la différence entre les signaux provenant du second filtre coloré et ceux provenant du premier filtre coloré. Ainsi, chacune desdites différences correspond strictement à l'une des couleurs de laquelle a été supprimée totalement la partie de l'autre couleur qui aurait dû être supprimée par les filtres, mais qui ne l'a pas été par suite de l'imperfection de ceux-ci.

Ces différences de signaux peuvent donc servir de données pour la quantification des phénomènes observés.

Enfin, pour supprimer toute influence due aux artefacts, on prévoit des moyens destinés à supprimer ceux-ci. De tels moyens peuvent mettre en oeuvre des moyens à retard, des moyens d'écrêtage, des moyens d'amplification et des moyens d'addition et/ou de soustraction permettant de supprimer chaque artefact par l'intermédiaire d'une portion de lui-même.

Les figures du dessin annexé feront bien comprendre comment l'invention peut être réalisée.

La figure 1 illustre schématiquement un exemple de réalisation de l'ensemble de prise de vue du système selon l'invention.

La figure 2 est une vue en plan d'un exemple de réalisation du disque utilisé dans l'ensemble de la figure 1.

La figure 3 donne le schéma synoptique simplifié de l'ensemble électronique du système selon l'invention.

La figure 4 et les figures 5a, 5b et 5c illustrent la correction en dôme des signaux vidéo du tube de prise de vue.

La figure 6 donne le schéma synoptique d'un dispositif de correction de fond des signaux colorés.

La figure 7 et les figures 8a à 8g illustrent la suppression des artefacts des signaux vidéo.

Les figures 9a et 9b illustrent une vue d'ensemble d'un exemple de réalisation des dispositifs de commande des déplacements de la platine par rapport à l'objectif, respectivement de face et de côté.

La figure 10 est une vue en plan, détaillée, d'un exemple de réalisation des automatismes pilotant les déplacements de la platine.

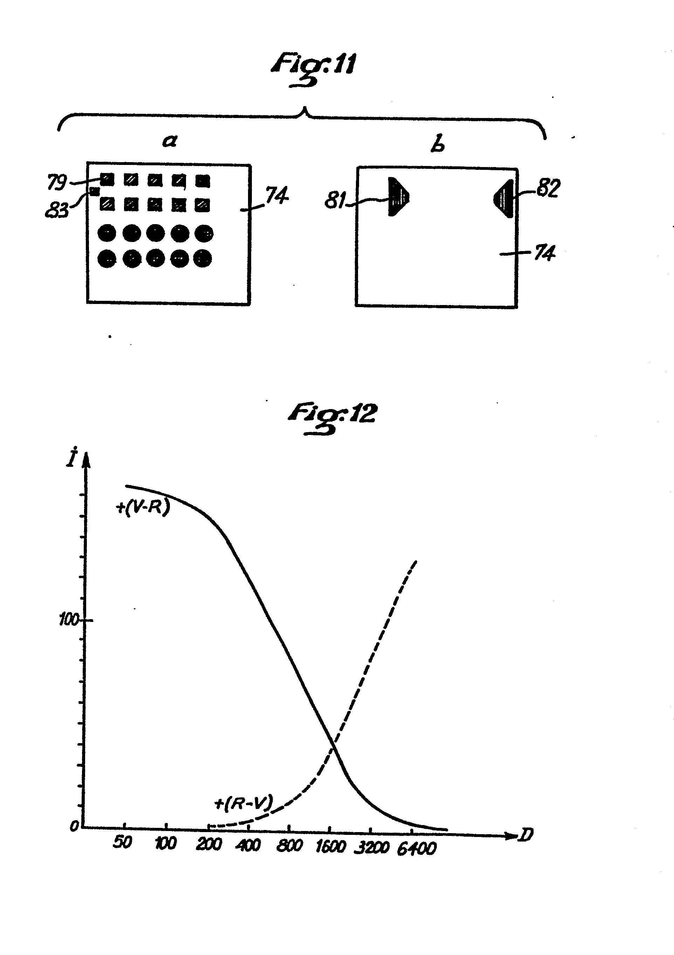

Le figures 11a et 11b illustrent un exemple de réalisation des plaques auxiliaires desdits automatismes, respectivement vues de dessus et de dessous.

La figure 12 représente l'allure des courbes de titrage dans une application à la toxoplasmose.

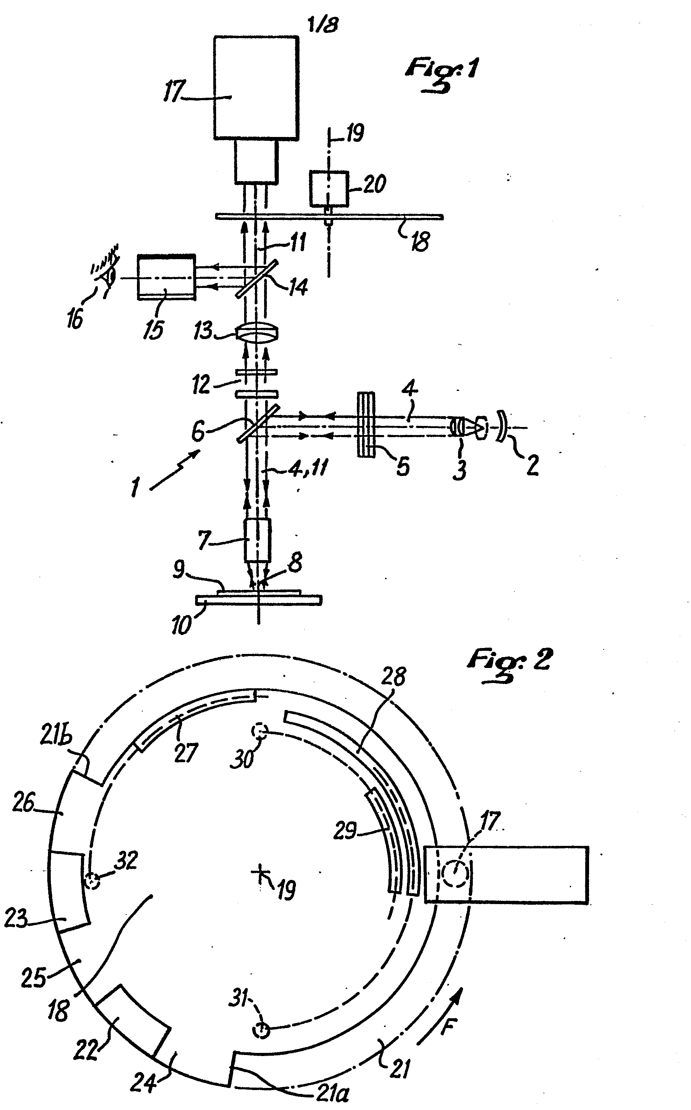

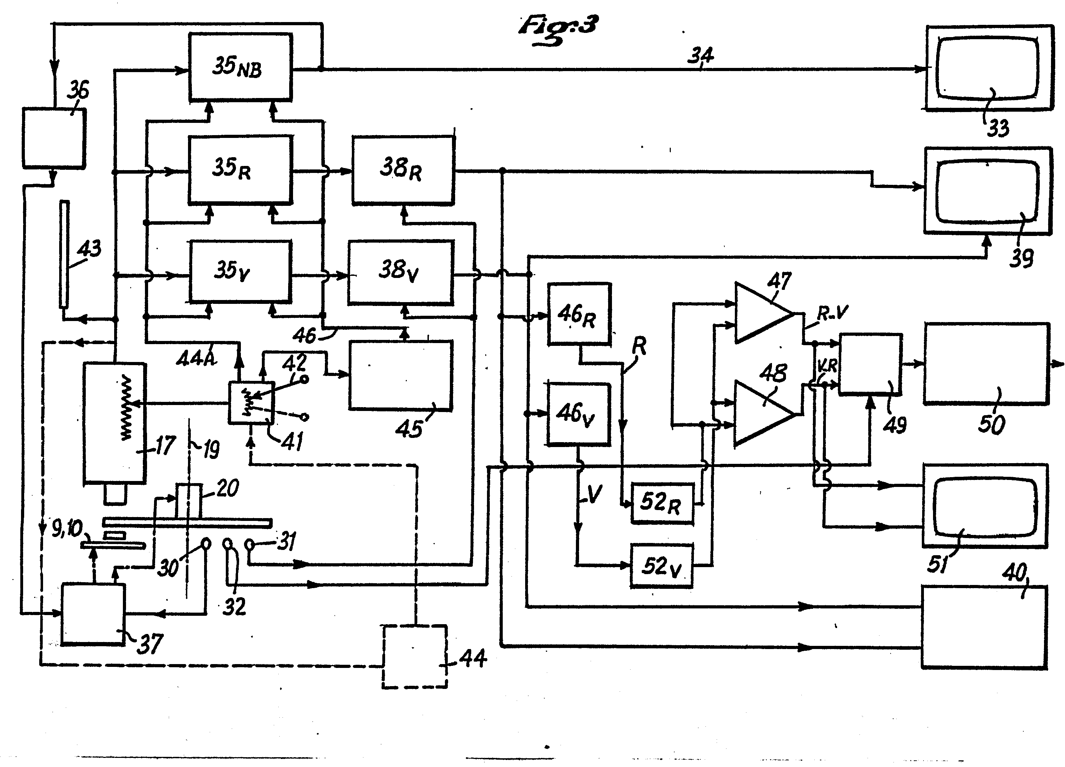

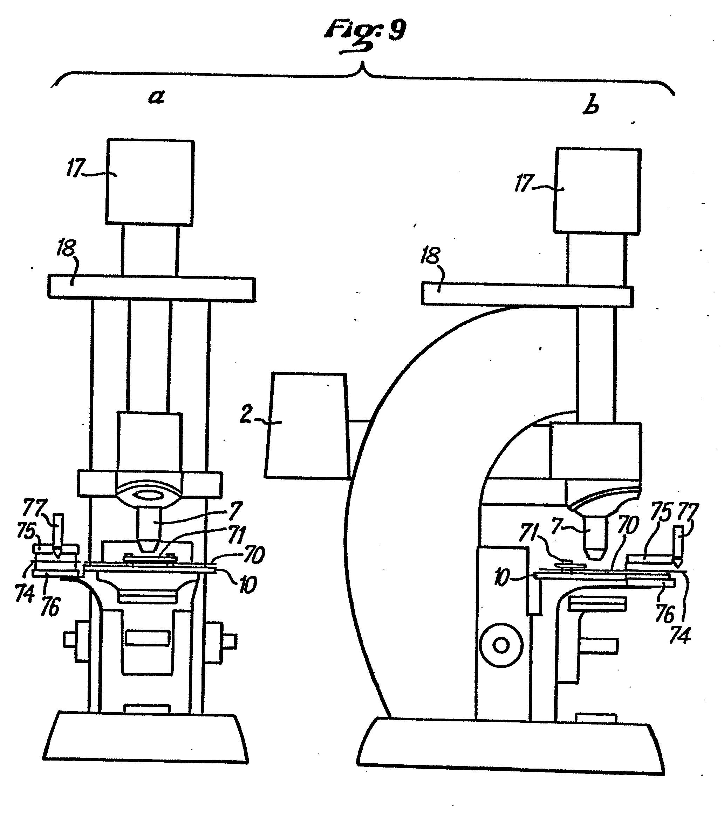

L'ensemble de prise de vue 1 selon l'invention, montré par la figure 1, comporte une source lumineuse de grande luminance 2, qui associée à un condenseur 3, émet un faisceau 4 de rayons parallèles, traversant des filtres d'excitation 5. Le faisceau 4 ainsi filtré frappe un miroir dichroïque 6 qui le dévie à 90° et le transmet à un objectif 7 qui concentre ledit faisceau sur une zone localisée 8, dans laquelle apparaît un phénomène fluorescent. Cette zone localisée peut être une partie d'une lame ou un alvéole d'une plaque, cette lame ou plaque 9 étant portée par une platine 10. Dans le cas où la plaque 9 comporte une pluralité d'alvéoles 8 à examiner, on prévoit (voir figures 9 à 11) un mécanisme de mouvement relatif de la platine 10 par rapport à l'objectif 7, de manière à faire défiler tour à tour chacun des alvéoles 8 sous ledit objectif 7 (voir le mécanisme 37 de la figure 3).

L'émission de fluorescence engendrée par le phénomène de la zone localisée 8 est reprise par l'objectif 7 qui la forme en un faisceau parallèle 11, transmise avec la partie réfléchie du faisceau 4, au miroir dichroïque 6, qui dévie la partie réfléchie du faisceau 4 vers la source 2. Le faisceau 11 de fluorescence traverse ensuite des filtres d'arrêt 12 et une optique 13. Eventuellement, un second miroir dichroïque 14 dévie une partie du faisceau 11 vers un oculaire 15, derrière lequel peut se placer l'oeil 16 d'un observateur.

Le faisceau 11 forme une image de la zone 8 sur la photocathode d'un tube de prise de vue 17, un disque 18 qui peut tourner autour de son axe 19 sous l'action d'un moteur 20, étant interposé sur le trajet du faisceau 11 transmis au tube de prise de vue 17.

On remarquera que l'ensemble des éléments 2 à 15 constitue un microscope du type utilisé jusqu'à présent dans la technique d'immunofluorescence et que la présente invention n'est concernée que par la
combinaison des éléments 17 à 20.

Par ailleurs, pour la mise en oeuvre de l'invention, le miroir
dichroïque 14 et l'oculaire 15 ne sont pas indispensables et pourraient être supprimés.

On remarquera de plus que la structure de l'ensemble 1 de la figure
1 est telle que la zone 8 est éclairée par la partie réfléchie du
faisceau 4. Bien entendu, cette disposition n'est pas limitative et
la zone 8 pourrait, par exemple, être examinée par transparence
plutôt que par réflexion, les éléments 12, 13 et 17 à 20 se trouvant
alors du côté opposé de l'objectif 7 par rapport à la platine 10.

Dans le cas où l'ensemble 1 de la figure 1 est destiné à l'examen
d'immunofluorescence à l'aide d'ITCF, la source 2 peut être des types
commercialement connus sous les noms HBO 50, HBO 100 ou HBO 200,
capable de fournir sur la zone 8 un éclairement de l'ordre de
50 000 à 100 000 lux, de sorte que, les réémissions de fluorescence
ayant un rendement de l'ordre de 1/100 à 1/1000, le faisceau 11 peut
présenter un éclairement de quelques centaines de lux. De plus, les
filtres d'excitation 5 peuvent être choisis parmi ceux commercialement connus sous les noms BG 12, LP 480 ou KP 490 ; ils sont alors
destinés à fournir un maximum d'excitation dans le bleu (entre 450
et 500 nm) et à atténuer très fortement les rayonnements au-dessus
de 500 nm. Le miroir dichroïque 6 est prévu dans cette application
pour laisser passer les longueurs d'onde jaunes du faisceau 11 en
direction du tube de prise de vue 17, mais pour renvoyer vers la
source 2 le rayonnement bleu du faisceau 4 réfléchi. L'action du
miroir dichroïque 6 est renforcée par les filtres d'arrêt 12 (par
exemple du type connu commercialement sous le nom LP 520) qui coupent
le bleu et ne laisse passer que les rayonnements de longueur d'onde supérieure à 500 nm, agissant ainsi en filtre passe-haut. L'optique 13, par exemple du type OPTAVAR, a pour objet de déplacer le foyer image de l'objectif 7 pour donner un éclairement plus uniforme de l'objet examiné. Comme le montre la figure 2, le disque 18, constitué d'une matière de couleur noire opaque au rayonnement du faisceau 11, comporte une large échancrure périphérique 21, ainsi que deux filtres rouge 22 et vert 23 périphériques. L'échancrure 21 et les filtres 22 et 23 sont disposés sur le disque 18 de façon à pouvoir être amenés successivement à l'aplomb du tube de prise de vue 17, lorsque ledit disque tourne (flèche F) sous l'action du moteur 20 ; la fin 21a de l'échancrure 21 est séparée du filtre 22 par une partie opaque 24 du dispositif 18 ; de même, les filtres 22 et 23 sont séparés l'un de l'autre par une partie opaque 25 du disque 18, tandis qu'une autre partie opaque 26 du disque 18 est disposée entre le début de l'échancrure 21 et le filtre 23. Les parties opaques 24, 25 et 26 ont pour objet d'occulter le tube 17 entre deux mesures de façon à le décharger et à éviter en partie l'effet de sa rémanence propre. Un effet antirémanence pourrait également être obtenu en bloquant le fonctionnement du tube entre deux mesures.

Enfin des fenêtres ou des zones réfléchissantes(qu'on appellera plus généralement "pistes") 27, 28 et 29 sont pratiquées dans le disque 18 de façon à pouvoir coopérer au cours de la rotation de celui-ci avec des dispositifs opto-électroniques fixes 30,31 et 32 (voir également la figure 3) à des fins de synchronisation, comme cela sera décrit ci-après.

Ainsi, lorsque le disque 18 tourne, se succèdent plusieurs séquences :

1- Tant que l'échancrure 21 se trouve à l'aplomb du tube de prise de vue 17, il peut observer la zone fluorescente 8 dans les meilleures conditions de définition, de sensibilité et de quantité de lumière. Il peut alors donner une image en noir et blanc de cette zone fluorescente sur un écran de télévision 33 (voir la figure 3). La liaison entre le tube de prise de vue 17 et l'écran de télévision 33 est réalisée par un câble vidéo 34, c'est-à-dire sans limitation de bande passante, avant interposition d'un dispositif $35_{NB}$ de prétraîtement des signaux vidéo noir et blanc. Pendant cette séquence d'observation en noir et blanc de la zone 8, le signal engendré par le tube 17 est important (ou tout au moins plus important que ceux engendrés au cours des autres séquences), de sorte que c'est pendant cette séquence qu'il est avantageux de mettre l'image au point, soit manuellement, soit automatiquement. La mise au point manuelle est effectuée par l'opérateur en observant l'image noir et blanc sur l'écran 33. Dans le cas d'une mise au point automatique, on prévoit un dispositif de mise au point automatique 36 de tout type connu, recevant des signaux vidéo noir et blanc provenant du dispositif de prétraîtement $35_{NB}$ et commandant en conséquence le mécanisme 37 de mouvement relatif de la platine 10 par rapport à l'objectif 7. On remarquera de plus que le mécanisme 37 reçoit des ordres du dispositif opto-électronique 30 pour les autres déplacements relatifs platine-objectif et pour la commande du moteur 20 du disque 18.

On trouvera plus loin la description détaillée d'un mode de réalisation des automatismes nécessaires à la commande des déplacements relatifs.

2- Lorsque la partie opaque 24 vient en regard du tube de prise de vue 17, celui-ci ne reçoit plus le faisceau 11, mais un niveau de noir qui lui permet de se décharger et de combattre l'effet de rémanence du tube 17.

3- Pendant que le filtre rouge 22 se trouve en regard du tube 17, celui-ci reçoit une image ou trame rouge de la zone 8.

4- La trame rouge est suivie de la réception d'un nouveau niveau de noir dû à la partie opaque 25 succédant au filtre rouge 22.

5- Ensuite, le filtre vert 23 succède à la partie opaque 25 sous le tube de prise de vue 17, de sorte que celui-ci reçoit une image ou trame verte de la zone 8.

6- Enfin le filtre vert 25 est suivi sous le tube 17 par la partie opaque 26 qui lui fournit un nouveau niveau de noir. Après la partie opaque 26, l'échancrure 21 vient de nouveau à l'aplomb du tube de prise de vue 17, pour un nouveau cycle.

Pendant les observations de la zone 8 par le filtre rouge 22 (point 3 ci-dessus), les signaux vidéo issus du tube 17, après prétraitement dans un dispositif $35_R$, sont emmagasinés dans une mémoire rouge $38_R$. De même, pendant les observations de la zone 8 par le filtre vert 23 (point 5 ci-dessus), les signaux vidéo issus du tube 17, après prétraitement dans un dispositif $35_V$ sont emmagasinés dans une mémoire verte $38_V$. De préférence, les mémoires $38_R$ et $38_V$ sont du type dit "mémoire rafraîchie".

Ainsi, à chaque tour du disque 18, il est possible de transformer les signaux vidéo vert et rouge successifs en signaux simultanés. En effet, il suffit de lire simultanément les deux mémoires $38_R$ et $38_V$ de façon que chaque point d'une des images verte ou rouge emmagasinée est superposé au point correspondant de l'autre image. La lecture simultanée des deux mémoires $38_R$ et $38_V$ permet donc d'obtenir la superposition des images verte et rouge. La mémorisation des signaux vert et rouge dans lesdites mémoires $38_R$ et $38_V$ est synchronisée avec la rotation du disque 18, grâce au dispositif optoélectronique 31. Les sorties des mémoires $38_R$ et $38_V$ peuvent être reliées à un téléviseur couleur 39 sur l'écran duquel apparaît l'image colorée de la zone 8 correspondante. De même, ces sorties peuvent être reliées à un magnétoscope 40 pour l'enregistrement desdites images colorées.

Le système selon l'invention permet ainsi de n'utiliser qu'un seul tube de prise de vue pour le vert et pour le rouge, de sorte que l'on élimine tous les problèmes de superposition et de dispersion de caractéristiques habituellement rencontrés dans les caméras de télévision utilisant un tube spécifique pour chaque couleur.

Quoique dans l'exemple de la figure 3, on n'ait utilisé que deux couleurs (le vert et le rouge) pour analyser la fluorescence de la zone 8, il va de soi que l'on pourrait prévoir sur le disque 18 un troisième filtre coloré bleu par exemple, qui serait associé à une troisième mémoire. Il serait ainsi possible d'analyser.tout le spectre visible, ce qui pourrait être utile dans certain cas d'excitation en ultra-violet.

Le tube de prise de vue 17 doit présenter une très grande sensibilité et , de plus, on doit pouvoir faire varier cette sensibilité de façon importante. Aussi, il est avantageux que ce tube de prise de vue soit du type comportant un multiplicateur d'électrons incorporé, en plus de l'analyseur d'images usuel des tubes VIDICON. Comme cela, le tube peut présenter un gain important, de l'ordre de 1 500 à 2 500, mais variable en fonction de la tension d'accélération du multiplicateur d'électrons. A titre d'exemple, on a utilisé avec satisfaction des tubes connus commercialement sous les noms de NOCTICON 9655, NOCTICON 9559 et SUPER NOCTICON. Dans de tels tubes, la tension d'accélération du multiplicateur d'électrons peut varier de 3 000 à 9 000 volts par exemple, entraînant une variation de la sensibilité dans un rapport de 1 à 400. Ils permettent d'analyser des images ayant un éclairement de $10^{-5}$ lux et formées sur leur photocathode de 25 mm de diamètre.

Comme on le verra par la suite, la sensibilité du tube de prise de vue 17 est ainsi réglée ou asservie avec précision et la commande de cette sensibilité contrôle également différentes corrections nécessaires pour obtenir une bonne quantification.

Cependant, les tubes de prise de vue à grande sensibilité variable du type mentionné ci-dessus, présentent l'inconvénient d'avoir une forte rémanence, de sorte que les signaux faibles sont exagérément amplifiés alors que les signaux forts sont peu affectés.

L'effet le plus marquant de cette rémanence consiste en ce que, au cours de l'analyse d'une trame, la trame précédente n'est pas encore effacée. L'expérience montre que cet effet n'est gênant que si l'intensité du signal à la sortie du tube 17 est inférieure à un seuil inférieur, par exemple égal à 25 nA. Or, l'intensité maximale du signal à la sortie du tube 17 est plusieurs fois supérieure (de l'ordre par exemple de 500 nA) à ce seuil inférieur, de sorte qu'il est possible de régler la tension d'accélération du multiplicateur d'électrons du tube 17 pour que le seuil ne soit jamais dépassé vers le bas. Comme montré sur la figure 3, le système selon l'invention comporte un dispositif 41 de réglage de la T.H.T. du tube de prise de vue 17, c'est-à-dire du gain d'amplification de ce dernier. La commande du dispositif 41 peut être manuelle, grâce à l'actionnement d'un organe 42, l'opérateur réglant la position de l'organe 42 en fonction des indications sur l'amplitude des signaux vidéo de sortie du tube 17, qui lui sont données par un vu-mètre 43. Eventuellement, le réglage peut être automatique par l'intermédiaire d'un dispositif 44 recevant les signaux de sortie du tube de prise de vue 17. Ainsi, manuellement ou automatiquement, on peut agir sur la tension d'accélération du multiplicateur d'électrons pour augmenter l'intensité du courant du signal de sortie, dès que celle-ci approche en décroissant dudit seuil inférieur.

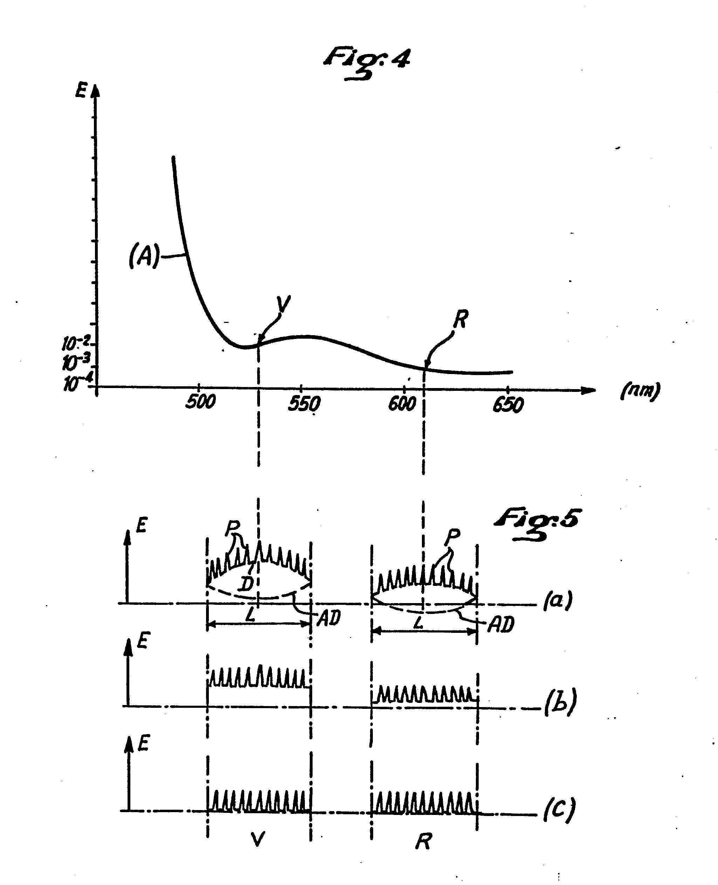

De plus, l'expérience montre qu'en dépit du miroir dichroïque 6 et des filtres 12, une certaine quantité de lumière provenant de la source d'excitation 2 atteint le tube 17, et constitue un fond dont l'éclairement peut être de quelques centièmes ou millièmes de lux. Aussi, pour les faibles niveaux de signal, le signal utile risque de se trouver inférieur à la valeur dudit fond. Il est donc nécessaire d'éliminer ce phénomène qui rendrait la quantification pratiquement impossible. Cependant, on doit tenir compte du fait que les affaiblissements des filtres étant différents suivant les longueurs d'onde (voir les figures 4 et 5), le fond n'a pas la même valeur pour les trames rouges que pour les trames vertes. Ainsi, il est nécessaire de prévoir des réglage séparés pour le noir et blanc, pour le rouge et pour le vert. Ces réglages séparés sont par exemple prévus dans les dispositifs $35_{NB}$, $35_R$ et $35_V$ de prétraitement des signaux vidéo, qui, pour l'essentiel, sont des amplificateurs. Grâce à ces réglages on peut amener les deux signaux vert et rouge à égalité sur un niveau zéro correspondant pour les fonds rouge et vert. Cependant,de tels réglages séparés ne sont valables que pour un niveau d'amplification déterminé du multiplicateur d'électrons du tube 17. Or, comme on l'a vu ci-dessus, il est indispensable de faire varier le niveau d'amplification dudit multiplicateur d'électrons. Aussi, il est indispensable de relier l'importance des corrections apportées aux fonds noir et blanc, rouge et vert au gain du tube 17. On peut constater sur la figure 3 que le dispositif de commande 41 de la haute tension de l'élément multiplicateur d'électrons du tube 17 commande également l'importance de la correction des niveaux des fonds noir et blanc, rouge et vert par l'intermédiaire d'une ligne $44_A$ asservissant les gains individuels des dispositifs $35_{NB}$, $35_R$ et $35_V$ au gain du tube de prise de vue 44.

Par ailleurs, de façon usuelle, on sait que l'éclairement d'une plage lumineuse délimitée par des bords est plus intense au centre qu'au voisinage desdits bords, de sorte que, transversalement à ladite plage, l'éclairement de celle-ci présente la forme d'un dôme.

Les figures 4 et 5 illustrent ces phénomènes. Sur la figure 4, on a représenté la courbe (A) d'affaiblissement de l'éclairement E (en lux) d'une zone 8 en fonction de la longueur d'onde $\lambda$ (en nm) de la lumière reçue de cette zone. On s'aperçoit que cet affaiblissement est plus grand pour le rouge que pour le vert. De plus, si comme sur la figure 5a, on représente l'éclairement E le long de la largeur L d'une zone 8, on voit que le fond de cette zone présente la forme d'un dôme D, à partir duquel apparaissent les pointes P des phénomènes fluorescents.

Pour contrecarrer cet effet de dôme, le système selon l'invention comporte un générateur 45 émettant des signaux AD de forme inverse desdits dômes. Le générateur 45 est relié au dispositif 41 de commande de gain du tube 17, de façon que les signaux AD soient de forme appropriée audit gain. Par une ligne 46, les signaux AD sont transmis aux différents dispositifs de prétraitement $35_{NB}$, $35_R$ et $35_V$, dans lesquels ils sont ajoutés aux signaux D + P reçus du tube 17. Il en résulte la disparition de l'effet de dôme (voir figure 5b). Par ailleurs, grâce à l'action du dispositif 41, par l'intermédiaire de la ligne $44_A$, il est possible d'amener, comme indiqué ci-dessus, les signaux vert et rouge au même niveau (figure 5c).

Bien entendu, le phénomène de dôme étant spatial et non pas linéaire, le dispositif 45 apporte une correction non seulement dans le sens des lignes, mais également dans le sens des trames.

Par l'intermédiaire de dispositifs de correction automatique de fond $46_R$ et $46_V$, et éventuellement de dispositifs anti-artefacts $52_R$ et $52_V$ (voir la figure 3), les signaux rouge et vert lus dans les mémoires $38_R$ et $38_V$ sont adressés à deux soustracteurs 47 et 48, délivrant respectivement à leurs sorties des signaux R-V et V-R qui sont transmis à un calculateur 49, piloté par le dispositif opto-électronique 32, puis à un dispositif d'affichage des résultats 50 et de là à un ordinateur (non représenté). Eventuellement, ces signaux R-V et V-R donnent une image colorée sur un écran de télévision couleur 51.

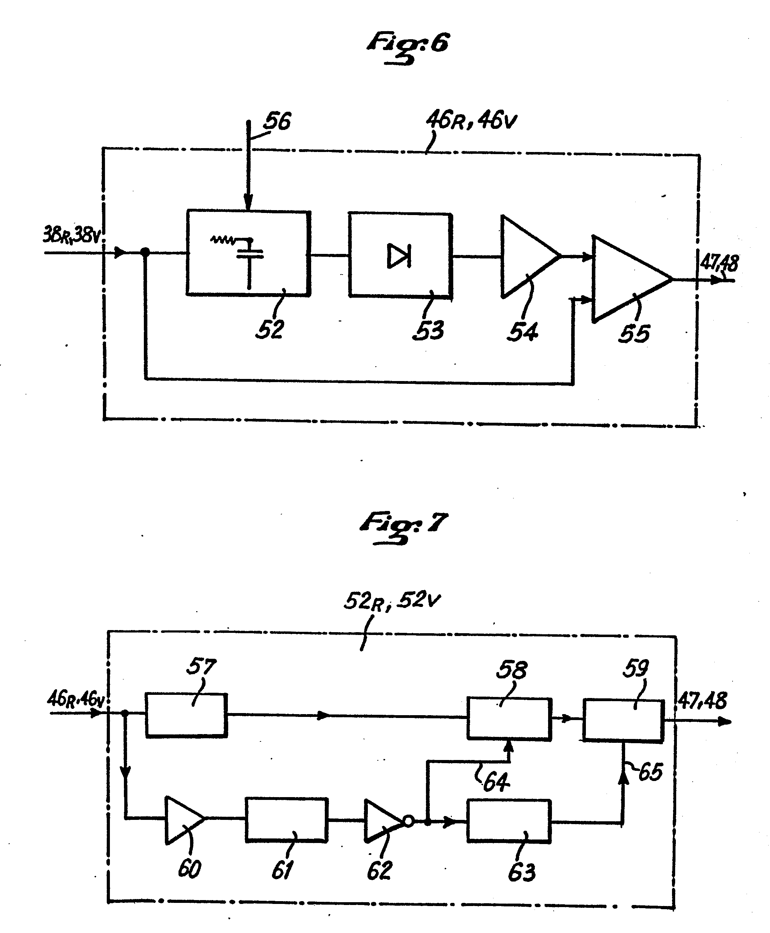

Comme le montre la figure 6, chacun des dispositifs de correction automatique de fond $46_R$ et $46_V$ comporte un intégrateur 52, un redresseur 53, éventuellement un amplificateur 54 et un soustracteur 55 recevant d'une part le signal de la chaîne 52, 53, 54 et d'autre part directement le signal des mémoires $38_R$ ou $38_V$.

La structure des dispositifs $46_R$ et $46_V$ est due à la constatation que les phénomènes fluorescents observés (pointes P de la figure 5) sont petits par rapport à la surface totale de la zone 8 observée : par exemple, ils ne représentent que quelques $\mu m^2$ de cette surface totale qui est de l'ordre de quelques $mm^2$. Aussi, l'intégration du signal total effectuée par les intégrateurs 52 fait disparaître le signal utile P pour ne donner que le fond. Cependant, pour éviter une intégration cumulative, il est indispensable de bloquer le fonctionnement des intégrateurs 52 entre chaque trame, ce qui est effectué par l'intermédiaire d'une commande 56. Le signal intégré par les intégrateurs 52 est ensuite redressé par les redresseurs 53 qui donnent une tension continue uniforme, qui, éventuellement amplifiée par les amplificateurs 54, est soustraite, dans les soustracteurs 55, des signaux rouge et vert.

Théoriquement, à la sortie des dispositifs $46_R$ et $46_V$, les signaux devraient être soit rouge, soit vert. Cependant, à cause de l'imperfection des filtres utilisés, il reste du vert dans le signal rouge et du rouge dans le vert. Aussi, c'est pour éviter cet inconvénient que l'on effectue en aval des dispositifs $46_R$ et $46_V$, les soustractions R-V et V-R par l'intermédiaire des soustracteurs 47 et 48. Ainsi, à la sortie de ceux-ci, le signal R-V représente le rouge contenu dans la zone 8, tandis que le signal V-R représente le vert contenu dans la zone 8. L'image colorée sur l'écran 51 est donc une image théorique de la zone 8

Par ailleurs, les signaux sortant des mémoires $38_R$ et $38_V$ peuvent comporter des artefacts, c'est-à-dire des signaux parasites, qui ne correspondent pas à la réalité de l'objet que l'on veut observer. Par exemple, dans le cas de l'immunofluorescence, les artefacts sont tous les objets visibles sur la préparation, mais étrangers à la réaction étudiée : ils peuvent être constitués de traces graisseuses de lames mal nettoyées, de grumeaux de tampon mal filtré, etc... et ils produisent des signaux souvent beaucoup plus lumineux et de plus grande surface que les éléments de la réaction considérée.

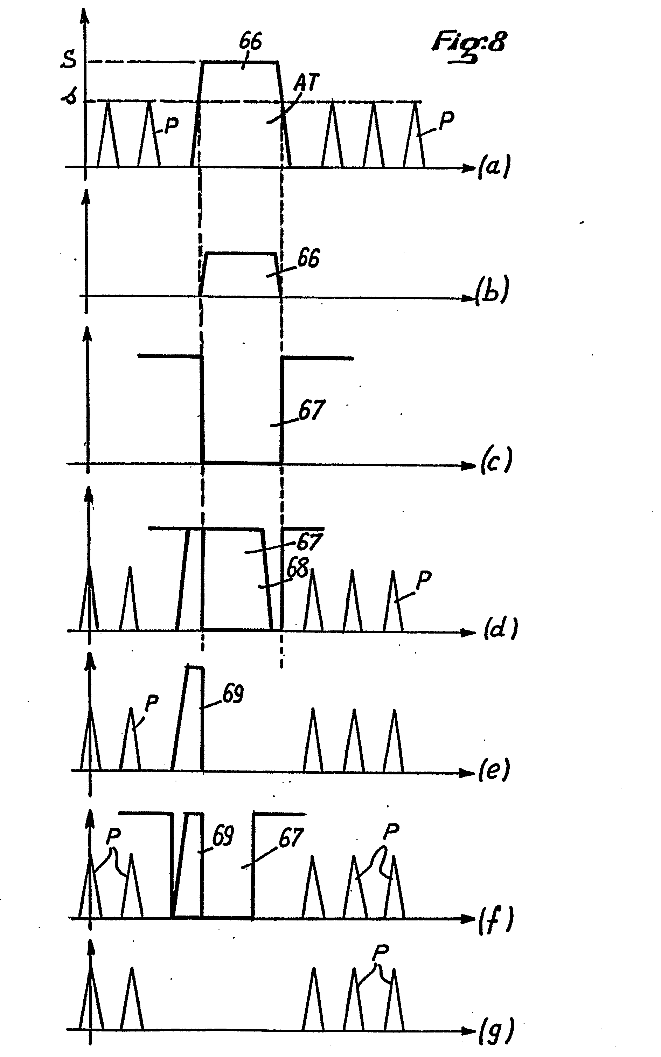

Sur la figure 8a, on a représenté un artefact AT intervenant au milieu des signaux utiles P. On remarquera qu'à cause de la capacité de stockage limitée dans les mémoires $38_R$ et $38_V$, un tel artefact AT est déjà écrêté à un niveau S.

Pour pouvoir supprimer la partie AT non écrêtée des artefacts, le système selon l'invention comporte deux dispositifs $52_R$ et $52_V$ recevant les signaux provenant respectivement des mémoires $38_R$ et $38_V$ et adressant des signaux corrigés aux soustracteurs 47 et 48 respectivement.

Comme le montre la figure 7, chacun des dispositifs anti-artefact $52_R$

ou $52_V$ comporte deux voies en parallèle, à savoir une voie comportant de l'entrée à la sortie, une ligne à retard 57 et deux additionneurs 58 et 59, et une voie comportant, également de l'entrée à la sortie, un éventuel amplificateur 60, un écrêteur 61, un amplificateur inverseur 62 et une ligne à retard 63. Des liaisons 64 et 65 sont prévues, respectivement entre la sortie de l'amplificateur inverseur 62 et l'additionneur 58, et entre la sortie de la ligne à retard 63 et l'additionneur 59. Le fonctionnement des dispositifs $52_R$ et $52_V$ est décrit en regard des figures 8b et 8g.

L'écrêteur 61 prélève, dans l'artefact AT, la partie 66 se trouvant entre le niveau s des signaux utiles P et le niveau maximal S (imposé par les mémoires $38_R$ et $38_V$) pour en faire un signal isolé (voir la figure 8b). Cette partie 66 du signal AT est amplifiée et inversée par l'amplificateur inverseur 62 pour devenir un créneau inversé 67 (voir figure 8c).

Dans l'additionneur 58, le créneau inversé 67 est additionné au signal AT + P, retardé par la ligne à retard 57, de façon que la partie avant 68 du signal AT soit supprimée par ledit créneau (voir les figures 8d et 8e). Seule subsiste alors du signal AT la partie arrière 69 (figure 8e).

Cependant, dans l'additionneur 59, le signal de la figure 8e est additionné au créneau inversé 67, retardé par la ligne à retard 63, de façon que la partie arrière 69 soit supprimée (figure 8f).

A la sortie des dispositifs $52_R$ et $52_V$ ne reste donc que la partie utile du signal AT + P, c'est-à-dire les pointes P (figure 8g).

En ce qui concerne l'enregistrement des images colorées, on remarquera que le magnétoscope 40 peut être de tout type habituel susceptible d'enregistrer des signaux colorés différents. Cependant, il est également possible d'utiliser un simple magnétoscope noir et blanc en affectant alternativement les trames paires (ou impaires) à l'une des couleurs (rouge ou verte) et les trames impaires (ou paires) à l'autre desdites couleurs (verte ou rouge).

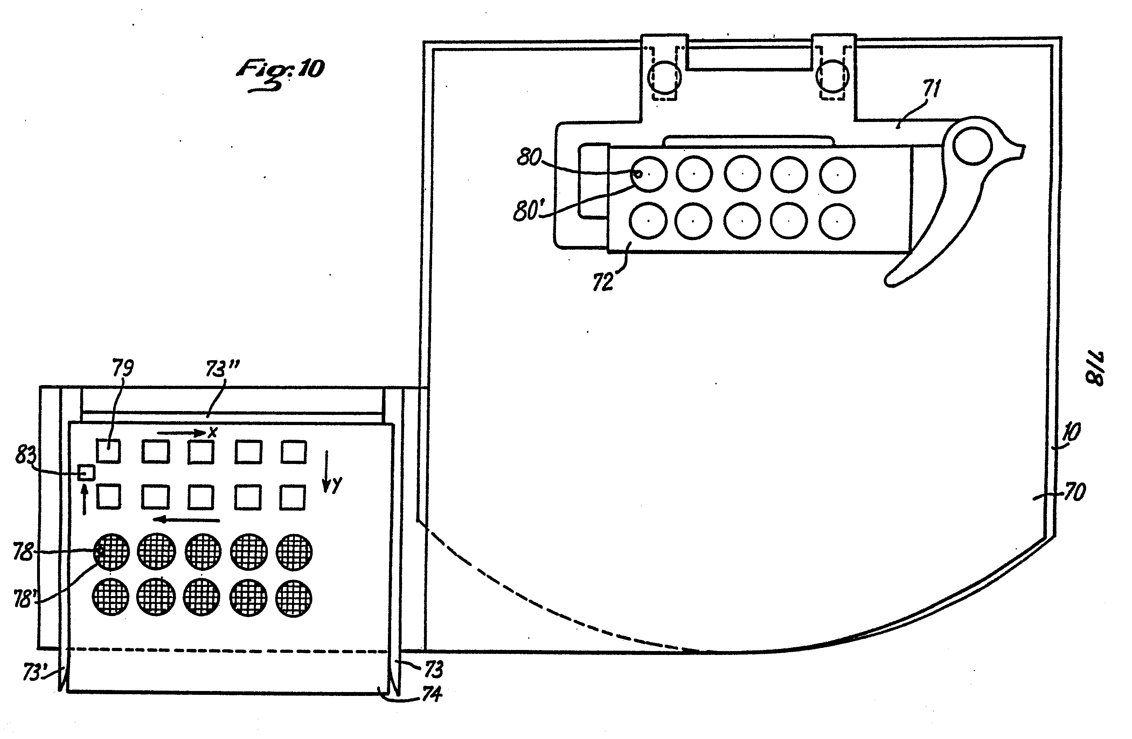

On a indiqué, page 16, lignes 15 à 18, que des signaux optoélectroniques permettaient la commande des déplacements de la platine 10 par rapport à l'objectif, et notamment en X et Y. Une manière simple de réaliser les automatismes nécessaires est représentée sur les figures 9a, 9b et 10, où l'on voit que l'on a disposé une platine mince complémentaire 70, solidaire du dispositif portelame 71 dans lequel la lame à examiner 72 est immobilisée. Cette platine complémentaire comporte, à la gauche de l'opérateur sur la figure 10 (mais à droite si on le désire), des glissières 73 et 73', dans lesquelles on peut insérer des plaques auxiliaires mobiles 74 (telles que celle représentée figure 10, 11a et 11b) dont le déplacement est limité à l' avant par une butée d'arrêt 73". Cette platine complémentaire 70 est elle-même insérée entre deux boîtiers, 75 pour la partie supérieure et 76 pour la partie inférieure (représentés figure 9), et renfermant un dispositif optoélectronique constitué par des ensembles de photodiodes et de diodes "LED" fonctionnant, soit par réflexion, soit par transparence. A l'avant de la partie supérieure 75 est fixé un cylindre de faible diamètre 77 comportant par exemple à l'intérieur une diode LED au sommet et une lentille à l'extrémité inférieure, de sorte qu'un point lumineux 78 apparaisse sur l'alvéole-image 78' de la plaque auxiliaire mobile 74. On voit sur la figure 10 que la plaque auxiliaire mobile 74 comporte notamment, d'une part l'image visible 78' des alvéoles, tels que se présentent les alvéoles réels de la lame 72 sous le microscope, et d'autre part, un ensemble constitué, soit d'éléments réfléchissants 79, soit de fentes permettant la transmission d'un signal à l'aide de sources de type LED, ledit signal étant recueilli par des photodiodes non représentées contenues dans le boîtier 76. Grâce à cet ensemble, toutes les combinaisons de déplacement sont ainsi possibles. On notera enfin que les éléments pourront représenter des configurations diverses mais que ceux-ci devront simplement être disposés suivant le programme désiré.

On a vu qu'en immunofluorescence, il était nécessaire, d'une part, d'observer et de quantifier en un temps très court, d'autre part, de ne jamais observer et quantifier deux fois le même point. On pourra donc procéder par exemple par échantillonnage. Un cycle automatique complet, pour une lame comportant (par exemple) 10 alvéoles, pourra être le suivant :

Le départ étant fixé grâce au point lumineux 78 sur la plaque auxiliaire 74, le dispositif étant mis en marche (manuellement), la platine 10 se déplace et l'ensemble platine et disque s'immobilise à partir d'un signal issu de l'"opto" supérieur 75, lui-même commandé par la reflexion sur le premier bord du carré 79 représenté figures 10 et 11a. La platine 10 étant immobilisée, de telle sorte que la première zone localisée (champ d'observation) 80 sur la lame 72, se trouve nettement à l'intérieur de l'alvéole 80', on procèdera à la mise au point, soit automatique, soit manuelle. On notera que la zone localisée 80 sur l'alvéole 80' est l'homologue en position du point lumineux 78 sur l'image visible 78' de la plaque auxiliaire 74.

Si la mise au point est manuelle, l'opérateur enverra une impulsion. Si la mise au point est automatique, elle enverra elle-même l'impulsion de commande de départ des séquences et de remise à zéro des compteurs et du dispositif d'affichage 50. Lorsque le disque 18 est arrêté, il se trouve immobilisé grâce à un dispositif optoélectronique 30 à la sortie des dispositifs porte-filtres et au début de la séquence d'analyse noir et blanc (piste 29 du disque 18). Quand il reçoit l'impulsion de commande de départ des séquences, le disque 18 se met en route et la platine se déplace en X. La platine 10 sera de nouveau immobilisée lors des mises en mémoire séquentielles du rouge puis du vert et repartira automatiquement à la fin de cette opération grâce au dispositif optoélectronique 30 provenant du disque 18. On voit que l'ensemble des alvéoles-images tels que 78' constitue des moyens de visualisation des alvéoles réels de la lame 72 et que l'ensemble des éléments tels que 79 constitue des moyens de commande pour arrêt et lecture sur des zones localisées dans la lame 72, coopérant avec le dispositif optoélectronique 30 du disque 18 et le dispositif optoélectronique 75 pour les déplacements en X.

On pourra ainsi, par exemple, observer et quantifier 10 échantillons jointifs ou non. Après le dixième échantillon à l'intérieur de l' alvéole n°1, le calculateur envoie un signal qui, d'une part, va interrompre la mise en mémoire, d'autre part, va "bloquer" le tube de prise de vue 17 jusqu'au début de l'alvéole suivant où le même cycle sera repeté, et ainsi de suite pendant les cinq alvéoles de la première rangée. A la fin de la première rangée, le dispositif optoélectronique situé à l'intérieur du boîtier 76 identifiant la fin de l' analyse en X grâce à la piste réfléchissante 81 portée par la face inférieure de la plaque auxiliaire 74 (voir figure 11b) permettra le déplacement en Y de la platine jusqu'à la rangée inférieure, où le cycle de déplacement en X sera répété, par exemple, en sens inverse. A la fin de ce second cycle de déplacement en X, le dispositif opto- électronique précité détectera la piste réfléchissante 82 indiquant la fin d'analyse et permettant, en coopération avec le repère réfléchissant 83, le retour de la lame 72 sensiblement à la position initiale.

On voit donc que l'ensemble des piste 81-82 et du repère 83 constitue des moyens de déplacement en Y, en coopération avec le dispositif optoélectronique 76.

Le système selon l'invention permettant la quantification des résultats, quelques exemples en sont donnés ci-après. La méthode d'échantillonnage a déjà été mentionnée page 25 lignes 3 et 4 et page 26 lignes 1 et 2, et, pour la commodité de l'opération, on a vu qu'elle a été limitée à 10 échantillons. Le calculateur va donc enregistrer 10 valeurs successives correspondant à l'amplitude des signaux, en valeur "crête" ou intégrée, après correction, représentant la partie positive de (V-R) d'une part, et la partie positive de (R-V) d'autre part.

Si, par exemple, on effectue un titrage de toxoplasmose en disposant dans les alvéoles successifs les dilutions 1/50, 1/100, 1/200, 1/400, 1/800, 1/1600, 1/3200, 1/6400 ... du sérum à étudier, le calculateur donnera une valeur moyenne des 10 échantillons pris dans un alvéole et correspondant à l'une des dilutions.

La figure 12 donne l'allure générale des courbes obtenues pour un titrage, où les dilutions ont été représentées en abscisse sur une échelle logarithmique et les intensités des signaux (V-R) et (R-V) ont été portées en ordonnée sur une échelle linéaire. On remarquera, sur ces courbes la descente rapide de +(V-R), et une remontée de +(R-V).

On a constaté que le point de croisement correspondait sensiblement à la dernière dilution positive, résultat qui correspond lui-même au titre du sérum.

Un autre procédé de quantification peut être nécessaire pour certaines applications, par exemple, la détermination du groupe HLA, où l'on n'effectue pas de titrage. Dans ce cas, on procèdera par des mesures de surface des éléments émettant respectivement +(V-R) et +(R-V). Le calculateur pourra en outre déterminer les rapports de ces surfaces au champ total.

On pourra également, selon les cas, utiliser une combinaison de la première méthode de mesure d'amplitude et de la deuxième méthode de mesure des surfaces, pour obtenir une plus grande sécurité des résultats.

Bien que la présente description de l'invention ait été faite à partir d'une forme particulière de réalisation, il est clair que l'on peut y apporter de nombreuses modifications dans les détails, en particuliers, en substituant des équivalents techniques au niveau de certains dispositifs ou fonctions sans sortir pour autant du cadre de ladite invention.

Revendications

1- Système pour l'observation et la quantification automatiques de phénomènes susceptibles d'être détectés par fluorescence et apparaissant dans une zone localisée (8), ledit système comportant une source de rayonnement (2), éventuellement associée à un filtre d'excitation (5) pour envoyer sur ladite zone localisée (8) un rayonnement d'excitation apte à produire ladite fluorescence, des moyens d'observation optique (7) de ladite zone localisée (8) et au moins un filtre (12) destiné à arrêter le rayonnement d'excitation et disposé sur le trajet du rayonnement lumineux de fluorescence provenant de ladite zone localisée (8), caractérisé en ce qu'il comporte un tube de prise de vue à gain variable (17) examinant successivement ladite zone localisée (8) à travers lesdits moyens d'observation optiques (7) et à travers au moins deux filtres colorés différents (22, 23) choisis en fonction de la longueur d'onde du rayonnement lumineux de fluorescence, des moyens de mémorisation ($38_R$, $38_V$) pour enregistrer les signaux électriques correspondant aux images colorées individuelles vues par ledit tube de prise de vue (17), des moyens pour restituer simultanément lesdits signaux électriques à la sortie desdites mémoires et des moyens (41 à 44) pour faire varier le gain dudit tube de prise de vue (17) de façon que l'amplitude des signaux de sortie de celui-ci soit toujours supérieure à un seuil en-dessous duquel la rémanence du tube (17) devient gênante.

2- Système selon la revendication 1, caractérisé en ce que les filtres colorés comprennent au moins un filtre rouge (22) et un filtre vert (23).

3- Système selon l'une des revendications 1 ou 2, caractérisé en ce que le tube de prise de vue (17) est amené de plus à examiner directement ladite zone localisée (8) pour en donner une représentation en noir et blanc utilisée pour la mise au point dudit tube de prise de vue.

4- Système selon l'une quelconque des revendications précédentes, caractérisé en ce que le tube de prise de vue (17) est occulté ou bloqué entre deux examens successifs à travers des filtres colorés successifs et/ou entre un examen à travers un filtre coloré et l'examen direct destiné à donner une représentation en noir et blanc.

5- Système selon la revendication 4, caractérisé en ce qu'il comporte un disque (18) pourvu au moins d'une fenêtre (21) correspondant à l'examen direct en noir et blanc, de filtres colorés (22, 23) et de plages opaques (24, 25, 26) et mû en rotation de façon à amener successivement lesdits fenêtres, filtres et plages à couper le faisceau lumineux de fluorescence (11) adressé audit tube de prise de vue (17).

6- Système selon la revendication 5, caractérisé en ce que la rotation du disque (18) est synchronisée avec l'enregistrement des signaux correspondant aux images colorées individuelles dans lesdits moyens de mémorisation ($38_R$ et $38_V$) et en ce que ce disque (18) coopère avec des capteurs fixes (30, 31, 32) qui participent à la synchronisation des divers éléments dudit système.

7- Système selon l'une des revendications précédentes, caractérisé en ce qu'il comporte des réglages séparés du niveau du fond pour chaque image colorée et en ce que ces réglages sont asservis (par 44) au gain d'amplification dudit tube.

8- Système selon l'une des revendications précédentes, caractérisé en ce qu'il comporte un générateur (45), asservi au gain dudit tube de prise de vue (17) et engendrant des signaux en cuvette (AD), destinés à annuler le fond en dôme des signaux provenant dudit tube de prise de vue et dus au fait que l'éclairement d'une zone lumineuse est généralement plus fort au centre de cette zone que sur les bords de cette dernière.

9- Système selon la revendication 8 caractérisé en ce que le générateur (45) fournit des signaux en cuvette (AD) aussi bien dans le sens de ligne que dans le sens de trame.

10- Système selon l'une quelconque des revendications précédentes, caractérisé en ce que, en aval desdits moyens de mémorisation ($38_R$ et $38_V$), il comporte des moyens ($46_R$ et $46_V$) de suppression de fond mettant en oeuvre une intégration et un redressement des signaux d'image et la soustraction des signaux ainsi obtenus des signaux réels.

11- Système selon l'une quelconque des revendications précédentes, caractérisé en ce qu'il comporte des moyens (47, 48) pour effectuer, d'une part, la différence R-V entre les signaux provenant d'un premier filtre coloré (22) et ceux provenant du second filtre coloré (23) et, d'autre part, la différence V-R entre les signaux provenant du second filtre coloré (23) et ceux provenant du premier filtre coloré (22).

12- Système selon l'une quelconque des revendications précédentes, caractérisé en ce qu'il comporte des moyens de suppression des artefacts, mettant en oeuvre des moyens à retard (57, 63), des moyens d'écrêtage (61), des moyens d'amplification (60, 62) et des moyens d'addition et/ou de soustraction (58, 59) permettant de supprimer chaque artefact par l'intermédiaire d'une portion de lui-même

13- Système selon l'une quelconque des revendications précédentes, caractérisé en ce qu'il comporte des automatismes permettant le déplacement, dans un plan de mise au point de la platine (10) par rapport à l'objectif (7), mettant en oeuvre, d'une part, des moyens de visualisation (78') des alvéoles réels de la lame (72) et des moyens de commande (79) pour arrêt et lecture sur des zones localisées (80) de la lame (72), coopérant avec le dispositif optoélectronique (30) du disque (18) et avec un dispositif optoélectronique (75), pour les déplacements en X et d'autre part, des moyens de commande (81, 82 et 83), coopérant avec un dispositif optoélectronique (76), pour les déplacements en Y.

*Fig. 1*

1/8

*Fig. 2*

Fig.3

*Fig. 4*

*Fig. 5*

## Fig.6

## Fig.7

Fig.8

Fig. 9

a

b

17

18

2

17

18

77
75
7
71
70
74 76
10

71 7 70 75 77
10
76
74

Fig. 10

Fig.11

a                              b

79
83                    74        81          82

                                      74

Fig.12

i

+(V-R)

100

+(R-V)

0

50  100  200  400  800  1600  3200  6400        D